# EUROPEAN PATENT APPLICATION

(11) **EP 4 730 154 A1**
(43) Date of publication of application: **22.04.2026**
(21) Application number: 24306687.5
(22) Date of filing: 15.10.2024
(51) Int. Cl.: G06F 16/334, G06F 16/3329, G06F 16/3332, G06N 20/00

(54) **RAG MODEL**

(71) Applicant: NXP B.V., 5656 AG Eindhoven (NL)
(72) Inventor: Pouthier, Baptiste, Mougins (FR)
(74) Representative: Miles, John Richard

(57) **Abstract**

The disclosure relates to methods of providing a response to a user query. A query is derived from the user query. An embedded query is obtained by passing the query through a first portion of a trained large language model. A semantically relevant element is obtained from an embedded database. The embedded database was obtained by embedding an initial database using the first portion of the trained large language model. The semantically relevant element is combined with the embedded query to form an augmented query. A response is provided (222) to the user query by passing (220) the augmented query through a second portion of the trained large language model.

## Description

### Field

The present specification relates to a computer-implemented method of providing a response to a user query, a computer-implemented method of obtaining a database for use in a RAG model, and related systems.

### Background

A method of providing responses to user queries is to input the user query into a trained large language model (LLM). Such LLMs are trained by using large amounts of data, such as text data. LLMs consequently suffer the limitation that all the information available is dated from before the LLM was trained. Therefore, keeping LLMs up to date with information proves challenging.

A method of keeping LLMs up to date with information is employing a Retrieval Augmented Generation (RAG) model. A RAG model is an LLM, an embedding model, and a database of information. In use, a user may provide their query to the RAG model, the model will embed the query using the embedding model then fetch information from the database using the embedded query that is relevant to the query. The model then augments the initial query with the information it has retrieved and provides the augmented query to the LLM which in turn provides the answer to the query.

With increasingly specialised hardware, optimising RAG models to run on diverse hardware allows for faster run-time and lighter weight models.

### Summary

According to a first aspect of the present disclosure there is provided a computer-implemented method for providing a response to a user query. The method comprises:
receiving a query derived from the user query;
obtaining an embedded query by passing the query through a first portion of a trained large language model;
obtaining at least one semantically relevant element from an embedded database, wherein the embedded database was obtained by embedding an initial database using the first portion of the trained large language model;
combining the at least one semantically relevant element with the embedded query to form an augmented query; and
providing a response to the user query by passing the augmented query through a second portion of the trained large language model.

The query may be derived from the user query by converting the user query into a sequence of tokens. Each token in the sequence of tokens may represent a letter, a plurality of consecutive letters, a word, or a plurality of consecutive words in the user query. The query may be plaintext.

The initial database may be plaintext. The initial database may comprise a plurality of text elements. The text elements may be stored in the initial database either as plaintext or by converting and storing the plaintext into a sequence of tokens, wherein each token may represent a letter, a plurality of consecutive letters, a word, or a plurality of consecutive words in the text element.

Combining the at least one semantically relevant element with the embedded query to form an augmented query may comprise concatenating the at least one semantically relevant element and the embedded query. The semantically relevant element originates from the embedded database, so shares a common embedding with the embedded query - both are obtained using an embedding performed by the first portion of the trained large language model.

In one or more embodiments, obtaining the at least one semantically relevant element from the embedded database may comprise:
comparing the embedded query to elements in the embedded database; and
returning elements of the embedded database that meet a predetermined condition based on the embedded query.

Comparing the embedded query to elements in the embedded database may comprise computing a similarity between the embedded query and elements in the embedded database. The predetermined condition based on the embedded query may be that the similarity is less than a predetermined threshold or may be a fixed number of elements that have the highest cosine similarity. The similarity may be determined using any suitable method, a non-limiting example of which is cosine similarity.

In one or more embodiments, obtaining the at least one semantically relevant element from the embedded database may comprise:
further embedding the embedded query using a secondary embedding model;
comparing the further embedded query to a further embedded database, wherein the further embedded database is obtained by embedding the embedded database using the secondary embedding model;
returning elements of the embedded database that correspond to elements of the further embedded database that meet a predetermined condition based on the further embedded query.

In one or more embodiments, the secondary embedding model may be a deep neural network. The secondary embedding model may have fewer than 10 million trainable parameters, the secondary embedding model may have fewer than 500000 trainable parameters. The secondary embedding model may have between 10000 and 10 million trainable parameters. The secondary embedding model may have fewer trainable parameters than the first portion of the trained large language model. The secondary embedding model may have 90% less, 80% less, 70% less, 60% less, 50% less, 40% less, 30% less, 20% less, or 10% less trainable parameters than the first portion of the trained large language model. The secondary embedding model may have approximately 0.001%, approximately 0.005%, and/or approximately 0.0005% of the trainable parameters of the trained large language model. The deep neural network may be a dense neural network.

In one or more embodiments, the trained large language model may comprise a plurality of attention blocks. The trained large language model may comprise a plurality of layers. Some or all of the layers of the plurality of layers may have a neural network structure and may be trainable via supervised learning or any other suitable training method. Each or some of the attention blocks of the plurality of attention blocks may comprise a mutually disjoint subset of the plurality of layers.

In one or more embodiments, the first portion of the trained large language model may comprise at least one initial attention block (e.g. the first, or the first and second, etc.) of the plurality of attention blocks, and the second portion of the trained large language model may comprise the remainder of the plurality of attention blocks. Alternatively and/or equivalently, the first portion may comprise an initial plurality of layers of the trained large language model (e.g., the first layer, or the first and second layer, etc.). The first portion may comprise at least one initial attention block and at least one layer from the attention block subsequent to the at least one initial attention block.

According to a second aspect of the present disclosure there is provided a computer-implemented method of obtaining an embedded database for use in a retrieval augmented generation model. The computer-implemented method comprises:
obtaining a trained large language model;
obtaining the embedded database, wherein obtaining the embedded database comprises embedding an initial database using a first portion of the trained large language model.

The method may comprise storing the embedded database.

In one or more embodiments, the computer-implemented method may further comprise:
obtaining a secondary embedding model from a large pretrained model, wherein the larger pretrained model has more trainable parameters than the secondary embedding model and is trained to further embed the embedded database.

Obtaining the secondary embedding model may comprise using knowledge distillation on the large pretrained model.

According to a third aspect of the present disclosure, there is provided a system comprising one or more processors and memory. The system may be configured to perform the steps according to the first aspect or the second aspect of the present disclosure (or any of the methods described herein).

In one or more embodiments, at least one of the one or more processors may be a neural processing unit. At least one of the one or more processors may be a microcontroller and/or a microprocessor. At least one of the one or more processors may be specifically adapted to support processing data with a transformer, CNN, RNN, and/or any neural network architectures. At least one of the one or more processors may be configured to operate at between 1 billion and 1 trillion operations per second.

According to a fourth aspect of the present disclosure, there is provided a non-transient machine readable medium comprising instructions for configuring one or more processors to perform a method according to the first aspect or second aspect, or any of the methods described herein.

Various example embodiments may be more completely understood in consideration of the following detailed description with the accompanying drawings.

### Brief description of drawings

Embodiments will be described, by way of example only, with reference to the drawings, in which:
Figure 1 is a schematic flow diagram of a known prior art RAG model;
Figure 2 is a schematic flow diagram of a method to provide a response to a user query;
Figure 3 is a schematic flow diagram of an alternate method to provide a response to a user query;
Figure 4 is a schematic flow diagram of a method of obtaining a database for use in a RAG model;
Figure 5 is a system configured to perform the method according to the present disclosure;
Figure 6 is a schematic flow diagram of an alternate method to provide a response to a user query; and
Figure 7 is a schematic flow diagram of an alternate method to provide a response to a user query.

It should be noted that the figures are diagrammatic and no drawn to scale. Relative dimensions and proportions of parts of these figures have been shown exaggerated or reduced in size, for the sake of clarity and convenience in the drawings. The same reference signs are generally used to refer to corresponding or similar feature in modified and different embodiments.

### Detailed description of embodiments

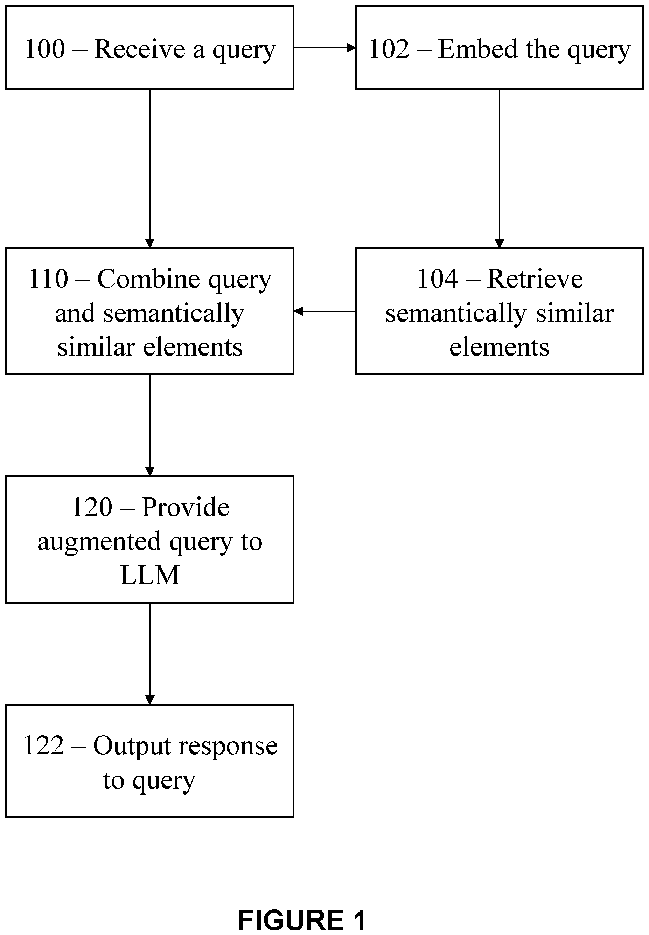

Figure 1 shows a schematic flow diagram of a known prior art Retrieval Augmented Generation (RAG) model. In such models, a query is received at 100.

The query is passed through a dedicated embedding model at 102. The embedding model can have anywhere between approximately 10 million and 50 billion parameters. The embedding model takes a phrase as an input and embeds it in an embedding vector space in a way that maintains phrases that are semantically similar as close together (i.e. similar) in the embedding vector space.

At 104, a database is queried for information that is semantically similar to the query (i.e. close together in the embedding vector space). The database typically has contains a plurality of key-value pairs with each value being the information in plaintext and the corresponding key being the vector of that value in the embedding vector space. Finding semantically similar elements is typically done using cosine similarity between vectors (keys) in the vector space. Relevant information (the values corresponding to the found keys) is then selected either by selecting the information that corresponds to a vector having a cosine similarity above a predetermined threshold or selecting a fixed number of information entries that correspond to the vectors having the highest cosine similarity. The skilled person will recognise that many different methods of selecting semantically similar elements are available and the above is not to be construed as limiting. From 104, at least one element of plaintext information that is relevant to the query is returned.

At 110, the query is combined with the information retrieved at 104. This is typically done by concatenating the query and information as strings. This forms the augmented query.

At 120, the augmented query is provided to a trained Large Language Model (LLM). The large language model is typically a transformer, such as Llama, chat-GPT, or BERT. Other LLMs are known, and the skilled person can select LLMs to suit their needs. The skilled person may also fine tune the LLM to suit their needs.

At 122, the LLM provides an output which is a response to the query received at 100.

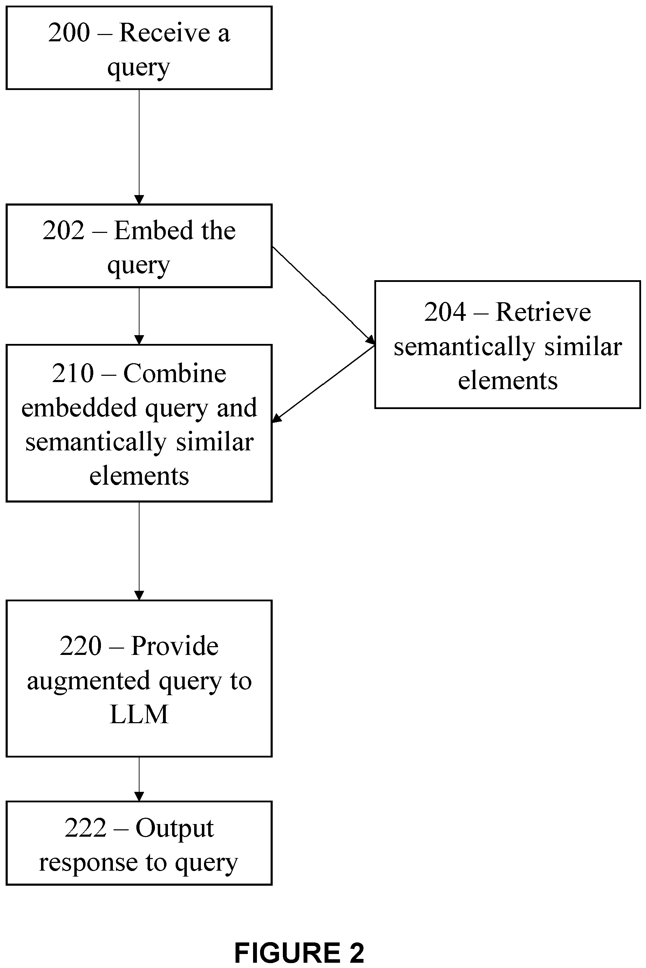

Turning to Figure 2, there is shown a schematic flow diagram of a computer-implemented method to provide a response to a user query according to the present disclosure. At 200, a user query is received, and a query is derived therefrom. This is typically achieved by converting each word in the query into a predetermined integer using a dictionary.

At 202, an embedded query is obtained by passing the query through a first attention block of a plurality of attention blocks. The plurality of attention blocks forms a trained LLM. The first attention block of a plurality of attention blocks is the first attention block in the LLM. Although, in this example, the embedded query is formed by passing the query through the first attention block, in other embodiments and different subset of the LLM (e.g., at least an initial plurality of layers of the trained LLM or a first plurality of attention blocks) may be used for embedding.

At 204, at least one semantically relevant element is obtained from a database. Compared to the database in Figure 1, the database in Figure 2 only needs to store the embedded information vectors corresponding to the information (i.e. only the keys of the database of Figure 1). However, the database in Figure 2 may store further information. The embedded information vectors were obtained by using the first attention block to embed the relevant information. In this way, the embedded query can be directly compared to the embedded information vectors. The database then returns semantically relevant elements which are embedded information vectors that are close to the embedded query in the embedded vector space.

At 210, the embedded query is combined with the at least one semantically relevant element to form an augmented query. This is achieved by concatenating the vectors.

At 220, the augmented query is passed through the remainder of the plurality of attention blocks and the rest of the LLM.

At 222, the LLM outputs a response to the user query.

Advantageously, using the first attention mechanism instead of a dedicated embedding model reduces the number of parameters and calculations necessary to compute a response to the user query. This lowers the memory load. Furthermore, since the database is already embedded using the first attention mechanism, the retrieved semantically relevant elements do not need to be processed by the first attention mechanism thereby reducing the overall latency.

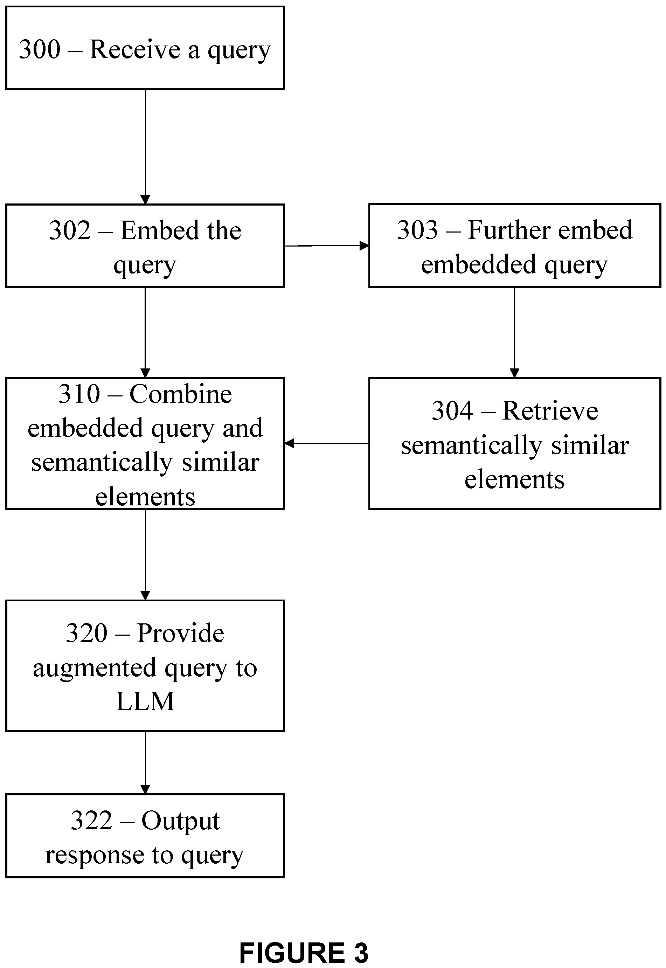

Turning to Figure 3, there is shown a flow diagram of an alternative computer-implemented method of providing a response to a user query according to the present disclosure. At 300, a user query is received, and a query is derived therefrom. This is typically achieved by converting each word in the query into a predetermined integer using a dictionary.

At 302, an embedded query is obtained by passing the query through a first attention block of a plurality of attention blocks. The plurality of attention blocks from a trained LLM. The first attention block of a plurality of attention is the first attention block in the LLM.

At 303, the embedded query is further embedded using a secondary embedding model. The secondary embedding model, in the present embodiment is, a Deep Neural Network (DNN), such as a dense neural network, and has between 10000 trainable parameters and 10 million trainable parameters (e.g., the DNN has approximately 400000 trainable parameters). However, in alternative embodiments, the secondary embedding model may be a different machine learning model. In the present embodiment, the secondary embedding model is trained using knowledge distillation (or teacher-student training) with a comparatively larger trained embedding model. i.e. the larger trained embedding model provides the secondary embedding model with labelled embedding samples on which to train. The skilled person will readily understand that there are alternative methods of training the secondary embedding model.

At 304, at least one semantically relevant element is obtained from a database. The database in this embodiment comprises a plurality of key-value pairs, wherein the value corresponds to the embedded query and the key corresponds to the embedded query that has been further embedded by the secondary embedding model. The at least one semantically relevant element is obtained by finding keys that are close to the further embedded query in the further embedded space. The values that correspond to the keys are then returned as the semantically relevant elements.

At 310, the embedded query is combined with the at least one semantically relevant element to form an augmented query. This is achieved by concatenating the vectors.

At 320, the augmented query is passed through the remainder of the plurality of attention blocks and the rest of the LLM.

At 322, the LLM outputs a response to the user query.

Advantageously, using the secondary embedding model allows for a more efficient further embedding that results in more accurate semantically relevant elements.

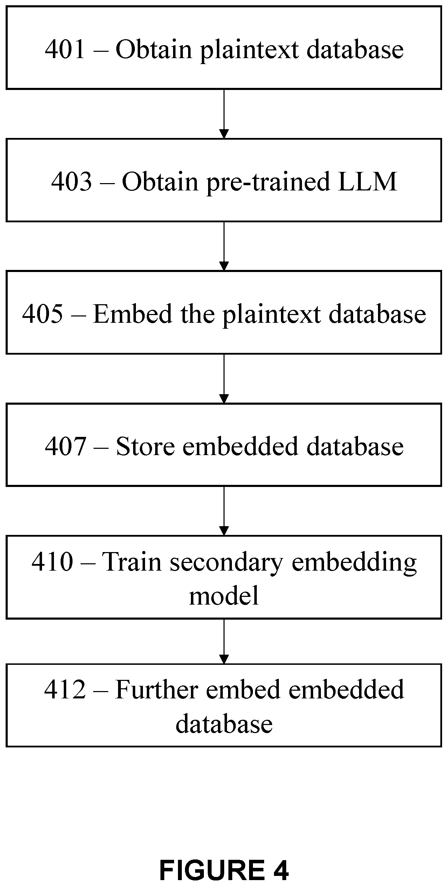

Turning to Figure 4, there is shown a schematic flow diagram of a computer-implemented method of obtaining a database for use in a retrieval augmented generation model.

At 401, a plaintext database containing a plurality of information that may be relevant to a user's query is obtained. In some embodiments, this database is obtained by segmenting portions of an instruction manual or technical manual. In other embodiments, this database is obtained by segmenting encyclopaedias.

At 403, a pre-trained LLM is obtained. In the present embodiment, the LLM may be Llama, however the skilled person will recognise that any pre-trained LLM can be selected. Preferably, the LLM is a transformer comprising a plurality of attention blocks.

At 405, the plaintext database is embedded using a first portion of the LLM by passing each element of the database through the first portion of the LLM. In the present embodiment, the first portion of the LLM is the first attention block of the LLM. In alternative embodiments, the first portion of the LLM may be a first plurality of the attention blocks of the LLM.

At 407, the embedded elements are stored in an embedded database. This embedded database can then be used in a retrieval augmented generation model such as the computer-implemented method described with respect to Figure 2.

Advantageously, this method does not require any dedicated training to embed the database and re-uses the first portion of the LLM that is needed for the RAG model.

Optionally, at 410, the method further comprises training a secondary embedding model. In the present embodiment, the secondary embedding model is a dense neural network comprising approximately 400000 trainable parameters. The secondary embedding model is presently trained using knowledge distillation from a larger pretrained model. The larger pretrained model has more trainable parameters than the secondary embedding model. The larger pretrained model generates labels for training data that is in turn used to train the secondary embedding model using known supervised learning methods.

At 412, the secondary embedding model is used to further embed the database by passing each of the embedded elements of the database through the secondary embedding model. These further embedded elements are stored in a further embedded database which is joined to the database in a way such that each embedded element is uniquely linked to the respective further embedded element. This further embedded database and corresponding links to the embedded database is then stored for use in a retrieval augmented generation model such as the computer-implemented method described with respect to Figure 3.

Whilst the above features in Figure 4 have been described as sequential, the skilled person will understand that features 401, 403, 407, 410, and 412 can be performed in different orders whilst remaining within the intended scope of the present disclosure.

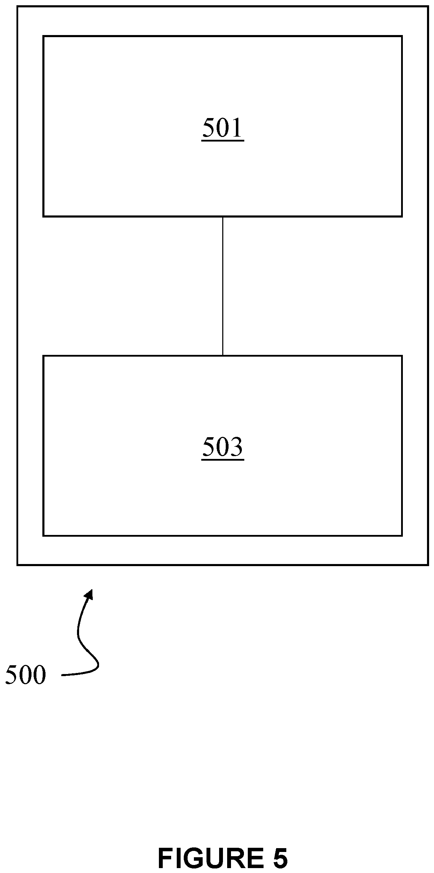

Turning to Figure 5, there is shown a system 500 comprising a processor 501 and a memory unit 503. Whilst one processor and memory unit is shown, the skilled person will understand that multiple processors and multiple memory units are equally envisaged.

The processor 501 is configured to perform the steps 200, 202, 204, 210, 220, 222. Alternatively, the processor 501 is configured to perform the steps 300, 302, 303, 304, 310, 320, 322. The memory unit 503 is configured to store the embedded database and optionally the further embedded database.

In the present embodiment, the processor is a Neural Processing Unit (NPU). Advantageously, NPUs are specifically adapted to support processing data with an LLM.

NPUs struggle to load, and schedule the processing of, two separate machine learning models such as the LLM and the dedicated embedding model required in the method of Figure 1. For example, the memory of an NPU may be too small to load both a dedicated embedding model and an LLM at the same time. Therefore, using the first attention module of the LLM may enable the method to be run on an NPU with constrained resources.

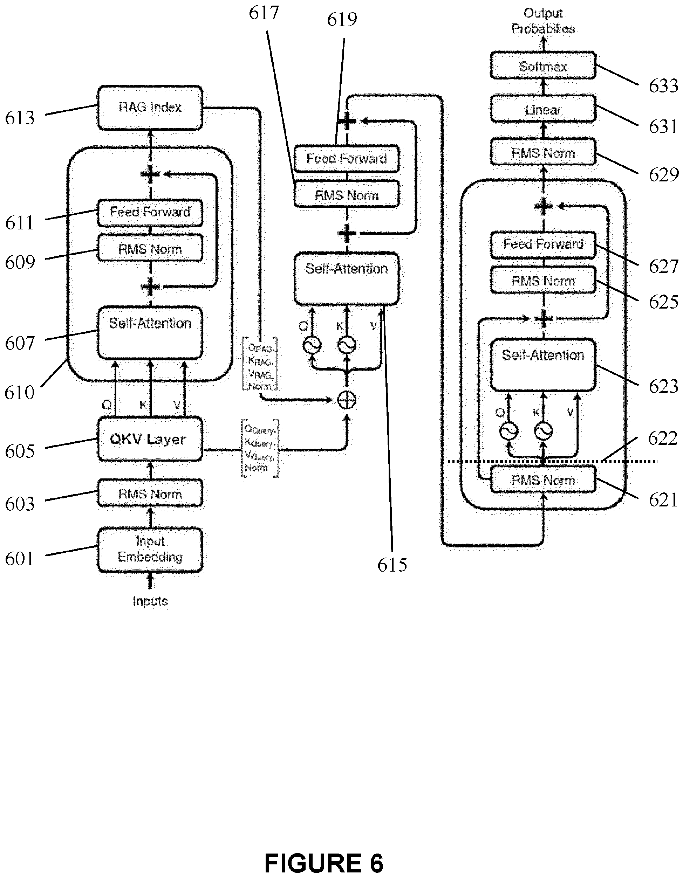

Turning to Figure 6, there is shown an alternate method of providing a response to a user query.

The user query is received as inputs, such as a string. The user query is then embedded using an input embedding 601 to derive the query. Such input embedding 601 typically consists of converting each word or token in the user query to either a scalar or a vector.

After the input embedding 601, the query is normalised using an RMS norm layer 603. Whilst RMS norm is used in this specific embodiment, the skilled person will recognise that other normalisation layers can equally be used, such as L1 or L2 norm.

The normalised input is then passed to a QKV layer 605. The QKV layer 605 computes the Query, Key, and Value matrices of the normalised input. Optionally, the QKV layer 605 further outputs the norm of the Query, Key, and Value matrices.

A first branch emanating from the QKV layer 605 is a secondary embedding model 610. In the present embodiment, the secondary embedding model 610 comprises a self-attention mechanism 607, an RMS norm layer 609, and a feed forward network 611. The secondary embedding model 610, embodied in the present example by the self-attention mechanism 607, allows for a more efficient further embedding that results in more accurate semantically relevant elements. In alternative embodiments, the secondary embedding model 610 may be based on other mechanisms such as recurrent neural networks, long-short term memory networks, or gated recurrent units. In some embodiments, the self-attention mechanism 607, RMS norm layer 609, and feed forward network 611 may be repeated to increase the depth of the secondary embedding model 610. The secondary embedding model 610 in the present embodiment is based on an attention mechanism, however in alternative embodiments, the secondary embedding model 610 may be based on other mechanisms, such as recurrent neural networks.

The output of the self-attention mechanism 607 is again normalised using the RMS norm layer 609 and passed into the feed forward network 611. The feed forward network 611 may be a dense neural network, a gated recurrent network, long-short term memory network, recurrent neural network, or any other suitable network.

The output of the feed forward network 611 is combined, in this example by adding, with the output of the self-attention mechanism 607 using a skip connection. This combination forms the further embedded query.

The further embedded query is then used by the RAG index 613 to index the further embedded database and obtain at least one semantically relevant element. Namely, the elements of the further embedded database were obtained by passing elements of the initial database through layers 601, 603, 605, 607, 609, and 611 of the present model. The corresponding embedded database is obtained by passing the same initial database only through layers 601, 603, and 605 of the present model. The RAG index 613 returns semantically relevant elements from the embedded database which in turn is concatenated with the Q, K, V matrices that are outputted from the QKV layer 605 to form an augmented query.

A rotary positional encoding is applied to the Q and K matrices of the augmented query. The augmented query is then passed to a self-attention mechanism 615.

The output of the self-attention mechanism 615 is normalised with an RMS norm layer 617 and then passed into a feed forward network 619. The output of the feed forward network 619 is combined with the output of the self-attention mechanism 615 using a skip connection.

The combined output is then normalised using an RMS norm layer 621. After the RMS norm layer 621, there is a QKV layer 622 (indicated by a dashed line) which computes the Q, K, V matrices of the normalised output from the RMS norm layer 621.

A rotary positional encoding is applied to the Q and K matrices before passing the Q, K, and V matrices through a self-attention mechanism 623. The output of the self-attention mechanism 623 is combined with the output of the QKV layer 622 using a skip connection.

The combined output is normalised using an RMS norm layer 625 and passed through a feed forward network 627. The output of the feed forward network 627 is combined with the output of the self-attention mechanism 623.

The layers 621, 622, 623, 625, and 627 form an attention block. The model comprises a plurality of sequential attention blocks, where the output from one attention block forms the input of the subsequent attention block. The plurality of attention blocks has not been depicted for clarity.

After the plurality of attention blocks, the output is normalised using a final RMS norm layer 629. The final normed output is passed through a linear layer 631. Lastly a softmax 633 is applied to compute the output probabilities. The output probabilities then is used to determine the response to the user query.

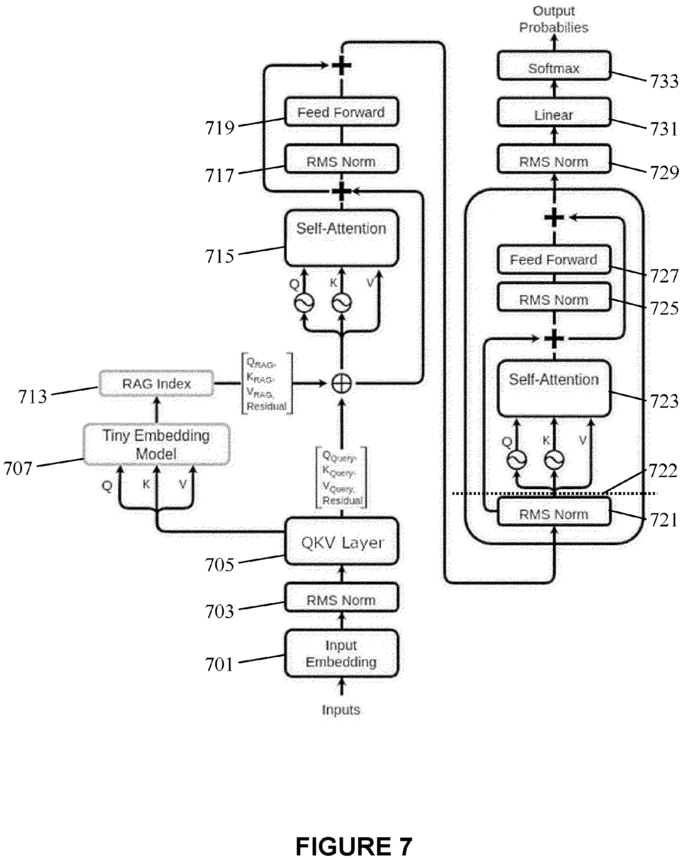

Turning to Figure 7, there is provided an alternate method of providing a response to a user query. The method of Figure 7 provides a similar method to that described in Figure 6, wherein the secondary embedding model 610 is provided as a general embedding model.

The user query is received as inputs, such as a string. The user query is then embedded using an input embedding 701 to derive the query. Such input embedding 701 typically consists of converting each word in the user query to either a scalar or a vector.

After the input embedding 701, the query is normalised using an RMS norm layer 703. Whilst RMS norm is used in this specific embodiment, the skilled person will recognise that other normalisation layers can equally be used, such as L1 or L2 norm.

The normalised input is then passed to a QKV layer 705. The QKV layer 605 computes the Query, Key, and Value matrices of the normalised input. Optionally, the QKV layer 605 further outputs the residual of the Query, Key, and Value matrices.

A first branch emanating from the QKV layer 705 is a secondary embedding model. In the present embodiment, the secondary embedding model comprises tiny embedding model 707. The tiny embedding model 707 is a deep neural network with fewer trainable parameters than the QKV layer 605. The output of the tiny embedding model 707 is the further embedded query. The secondary embedding model, embodied in the present example by the tiny embedding model 707, allows for a more efficient further embedding that results in more accurate semantically relevant elements. Furthermore, since the query is already embedded using a first QKV layer 605, the tiny embedding model 707 can be comparatively smaller (in terms of trainable parameters) than standard embedding models whilst achieving the same or similar accuracy of retrieval of semantically relevant elements.

The further embedded query is then used by the RAG index 713 to index the further embedded database and obtain at least one semantically relevant element. Namely, the elements of the further embedded database were obtained by passing elements of the initial database through layers 701, 703, 705, and 707 of the present model. The corresponding embedded database is obtained by passing the same initial database only through layers 601, 603, and 605 of the present model. The RAG index 713 returns semantically relevant elements from the embedded database which in turn is concatenated with the Q, K, V matrices that are outputted from the QKV layer 705 to form an augmented query.

A rotary positional encoding is applied to the Q and K matrices. The augmented query is then passed to a self-attention mechanism 715.

The output of the self-attention mechanism 715 is normalised with an RMS norm layer 717 and then passed into a feed forward network 719. The output of the feed forward network 719 is combined with the output of the self-attention mechanism 615 using a skip connection.

The combined output is then normalised using an RMS norm layer 721. After the RMS norm layer 721, there is a QKV layer 722 (for the purposes of clarity, presently shown as a dashed line) which computes the Q, K, V matrices of the normalised output from the RMS norm layer 721.

A rotary positional encoding is applied to the Q and K matrices before passing the Q, K, and V matrices through a self-attention mechanism 723. The output of the self-attention mechanism 723 is combined with the output of the QKV layer 722 using a skip connection.

The combined output is normalised using an RMS norm layer 725 and passed through a feed forward network 727. The output of the feed forward network 727 is combined with the output of the self-attention mechanism 723.

The layers 721, 722, 723, 725, and 727 form an attention block. The model comprises a plurality of sequential attention blocks, where the output from one attention block forms the input of the subsequent attention block. The plurality of attention blocks has not been depicted for clarity.

After the plurality of attention blocks, the output is normalised using a final RMS norm layer 729. The final normed output is passed through a linear layer 731. Lastly a softmax 733 is applied to compute the output probabilities. The output probabilities is then used to determine the response to the user query.

From reading the present disclosure, other variations and modifications will be apparent to the skilled person. Such variations and modifications may involve equivalent and other features which are already known in the art, and which may be used instead of, or in addition to, features already described herein.

Although the appended claims are directed to particular combinations of features, it should be understood that the scope of the present disclosure also includes any novel feature or any novel combination of features disclosed herein either explicitly or implicitly or any generalisations thereof, whether or not it relates to the same subject matter as presently claimed in any claim and whether or not it mitigates any or all of the same technical problems as does the present disclosure.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further applications derived therefrom.

For the sake of completeness, it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A computer-implemented method of providing a response to a user query, the method comprising:
receiving (200) a query derived from the user query;
obtaining (202) an embedded query by passing the query through a first portion of a trained large language model;
obtaining (204) at least one semantically relevant element from an embedded database, wherein the embedded database was obtained by embedding an initial database using the first portion of the trained large language model;
combining (210) the at least one semantically relevant element with the embedded query to form an augmented query; and
providing (222) a response to the user query by passing (220) the augmented query through a second portion of the trained large language model.

2. The computer-implemented method of claim 1, wherein obtaining (204) the at least one semantically relevant element from the embedded database comprises:
comparing the embedded query to elements in the embedded database; and
returning elements of the embedded database that meet a predetermined condition based on the embedded query.

3. The computer-implemented method of claim 1, wherein obtaining (304) the at least one semantically relevant element from the embedded database comprises:
further embedding (303) the embedded query using a secondary embedding model to produce a further embedded query;
comparing the further embedded query to a further embedded database, wherein the further embedded database is obtained by embedding the embedded database using the secondary embedding model; and
returning elements of the embedded database that correspond to elements of the further embedded database that meet a predetermined condition based on the further embedded query.

4. The computer-implemented method of claim 3, wherein the secondary embedding model is a deep neural network and has fewer than 10 million trainable parameters.

5. The computer-implemented method of any preceding claim, wherein the trained large language model comprises a plurality of layers.

6. The computer-implemented method of claim 5, wherein the first portion of the trained large language model comprises at least one initial layer of the plurality of layers, and the second portion of the trained large language model comprises the remainder of the plurality of layers.

7. The computer-implemented method of any preceding claim, wherein the trained large language model comprises a plurality of attention blocks.

8. The computer-implemented method of claim 7, wherein the first portion of the trained large language model comprises at least one initial attention block of the plurality of attention blocks, and the second portion of the trained large language model comprises the remainder of the plurality of attention blocks.

9. A computer-implemented method of obtaining an embedded database for use in a retrieval augmented generation model, the method comprising:
obtaining (403) a trained large language model; and
obtaining the embedded database, wherein obtaining the embedded database comprises embedding (405) and an initial database using a first portion of the trained large language model.

10. The computer-implemented method of claim 9, further comprising storing (407) the embedded database.

11. The computer-implemented method of claim 9 or 10, further comprising:
obtaining (410) a secondary embedding model from a larger pretrained model, wherein the larger pretrained model has more trainable parameters than the secondary embedding model and is trained to further embed the embedded database.

12. The computer-implemented method of claim 11, wherein obtaining the secondary embedding model comprises using knowledge distillation on the large pretrained model.

13. A system comprising one or more processors and a memory, configured to perform the steps of:
receiving (200) a query derived from a user query;
obtaining (202) an embedded query by passing the query through a first portion of a trained large language model;
obtaining (204) at least one semantically relevant element from an embedded database, wherein the embedded database is obtainable by embedding an initial database using the first portion of the trained large language model;
combining (210) the at least one semantically relevant element with the embedded query to form an augmented query; and
providing (222) a response to the user query by passing (220) the augmented query through a second portion of the trained large language model.

14. The system of claim 13, wherein at least one of the one or more processors is a neural processing unit.

15. A non-transient machine readable medium comprising instructions for configuring one or more processors to perform a method comprising the steps of:
receiving (200) a query derived from a user query;
obtaining (202) an embedded query by passing the query through a first portion of a trained large language model;
obtaining (204) at least one semantically relevant element from an embedded database, wherein the embedded database is obtainable by embedding an initial database using the first portion of the trained large language model;
combining (210) the at least one semantically relevant element with the embedded query to form an augmented query; and
providing (222) a response to the user query by passing (220) the augmented query through a second portion of the trained large language model.

## Amended claims

### Amended claims in accordance with Rule 137(2) EPC.

1. A computer-implemented method of providing a response to a user query, the method comprising:
receiving (200) a query derived from the user query;
obtaining (202) an embedded query by passing the query through a first portion of a trained large language model;
obtaining (204) at least one semantically relevant element from an embedded database, wherein the embedded database was obtained by embedding an initial database using the first portion of the trained large language model;
combining (210) the at least one semantically relevant element with the embedded query to form an augmented query; and
providing (222) a response to the user query by passing (220) the augmented query through a second portion of the trained large language model.

2. The computer-implemented method of claim 1, wherein obtaining (204) the at least one semantically relevant element from the embedded database comprises:
comparing the embedded query to elements in the embedded database; and
returning elements of the embedded database that meet a predetermined condition based on the embedded query.

3. The computer-implemented method of claim 1, wherein obtaining (304) the at least one semantically relevant element from the embedded database comprises:
further embedding (303) the embedded query using a secondary embedding model to produce a further embedded query;
comparing the further embedded query to a further embedded database, wherein the further embedded database is obtained by embedding the embedded database using the secondary embedding model; and
returning elements of the embedded database that correspond to elements of the further embedded database that meet a predetermined condition based on the further embedded query.

4. The computer-implemented method of claim 3, wherein the secondary embedding model is a deep neural network and has fewer than 10 million trainable parameters.

5. The computer-implemented method of any preceding claim, wherein the trained large language model comprises a plurality of layers.

6. The computer-implemented method of claim 5, wherein the first portion of the trained large language model comprises at least one initial layer of the plurality of layers, and the second portion of the trained large language model comprises the remainder of the plurality of layers.

7. The computer-implemented method of any preceding claim, wherein the trained large language model comprises a plurality of attention blocks.

8. The computer-implemented method of claim 7, wherein the first portion of the trained large language model comprises at least one initial attention block of the plurality of attention blocks, and the second portion of the trained large language model comprises the remainder of the plurality of attention blocks.

9. A computer-implemented method of obtaining an embedded database for use in a retrieval augmented generation model, the method comprising:
obtaining (403) a trained large language model;
obtaining the embedded database, wherein obtaining the embedded database comprises embedding (405) and an initial database using a first portion of the trained large language model; and
storing (407) the embedded database, wherein the embedded database does not store the initial database.

10. The computer-implemented method of claim 9, further comprising:
obtaining (410) a secondary embedding model from a larger pretrained model, wherein the larger pretrained model has more trainable parameters than the secondary embedding model and is trained to further embed the embedded database.

11. The computer-implemented method of claim 10, wherein obtaining the secondary embedding model comprises using knowledge distillation on the large pretrained model.

12. A system comprising one or more processors and a memory, configured to perform the steps of:
receiving (200) a query derived from a user query;
obtaining (202) an embedded query by passing the query through a first portion of a trained large language model;
obtaining (204) at least one semantically relevant element from an embedded database, wherein the embedded database is obtainable by embedding an initial database using the first portion of the trained large language model;
combining (210) the at least one semantically relevant element with the embedded query to form an augmented query; and
providing (222) a response to the user query by passing (220) the augmented query through a second portion of the trained large language model.

13. The system of claim 12, wherein at least one of the one or more processors is a neural processing unit.

14. A non-transient machine readable medium comprising instructions for configuring one or more processors to perform a method comprising the steps of:
receiving (200) a query derived from a user query;
obtaining (202) an embedded query by passing the query through a first portion of a trained large language model;
obtaining (204) at least one semantically relevant element from an embedded database, wherein the embedded database is obtainable by embedding an initial database using the first portion of the trained large language model;
combining (210) the at least one semantically relevant element with the embedded query to form an augmented query; and
providing (222) a response to the user query by passing (220) the augmented query through a second portion of the trained large language model.
